(19) Europäisches Patentamt
European Patent Office
Office européen des brevets

(11) **EP 1 619 578 B1**

(12) **EUROPEAN PATENT SPECIFICATION**

(45) Date of publication and mention
of the grant of the patent:
**06.04.2016 Bulletin 2016/14**

(51) Int Cl.:
***G06F 3/033*** *(2006.01)*

(21) Application number: **04254383.5**

(22) Date of filing: **22.07.2004**

(54) **Optical device, and optical mouse incorporating the optical device**

Optische Vorrichtung und diese enthaltende optische Maus

Dispositif optique et souris optique le comprenant

(84) Designated Contracting States:
**DE FR GB IT**

(43) Date of publication of application:
**25.01.2006 Bulletin 2006/04**

(73) Proprietor: **STMicroelectronics (Research & Development) Limited**
**Marlow, Buckinghamshire SL7 1YL (GB)**

(72) Inventors:
• **Findlay, Ewan**
**Limekilns KY11 3HJ (GB)**
• **De Lajarte, Gilles Dufaure**
**Edinburgh EH3 7EG (GB)**

(74) Representative: **Style, Kelda Camilla Karen et al**
**Page White & Farrer**
**Bedford House**
**John Street**
**London, WC1N 2BF (GB)**

(56) References cited:
**DE-A1- 10 220 890     US-A1- 2003 034 959**

• **SCHWARTZ ET AL.: "CONCISE DICTIONARY" 3 August 1999 (1999-08-03), CHAMBERS HARRAP PUBLISHERS LTD , EDIMBURGH , XP002317589 * page 842, column 1, line 46 - line 50 ***

**Description**

This invention relates to optical pointing devices, or mice, for use with computers, and to optical devices for use in such pointing devices.

It is well known that optical mice have advantages over mice relying on physical rolling of a ball. A variety of optical mice are widely available. However, optical mice in current commercial use have a number of disadvantages.

One is that the thickness or height from the work surface is typically larger than with roller mice, owing to constraints imposed by the optical projection and imaging systems. This can be uncomfortable and lead to fatigue or worse for the user.

Another is that the optical design is unduly complex, typically requiring changes of direction on two or more reflecting surfaces, leading to additional component and assembly costs. US2003/034959A shows an example of such an arrangement, having two reflecting surfaces, and also shows the use of a horizontally mounted LED which helps to reduce overall height.

DE 102 20 890 A1 has embodiments (Figs. 1 and 2) in which the use of reflecting surfaces is avoided. It also has embodiments (Figs. 3C and 5) in which an illuminating LED is arranged horizontally, but these embodiments require the use of reflecting surfaces.

The present invention seeks to overcome or mitigate these problems.

Accordingly, the present invention provides an optical device as set out in claim 1. From another aspect, the invention provides an optical mouse as set out in claim 12.

Preferred features of the invention will be apparent from the following description and from the claims. An embodiment of the invention will now be described, by way of example only, with reference to the drawings, in which:

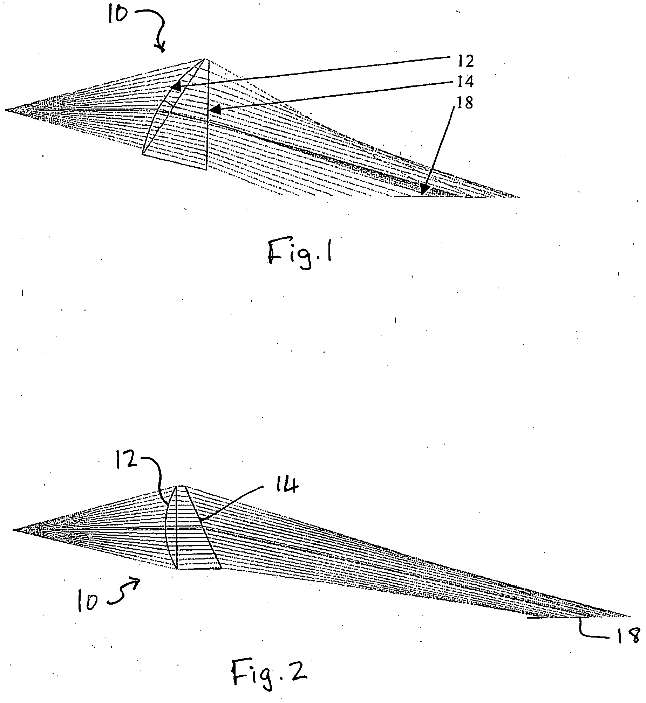

> Figs. 1 and 2 are side views illustrating the principles of the light guide of the present invention;

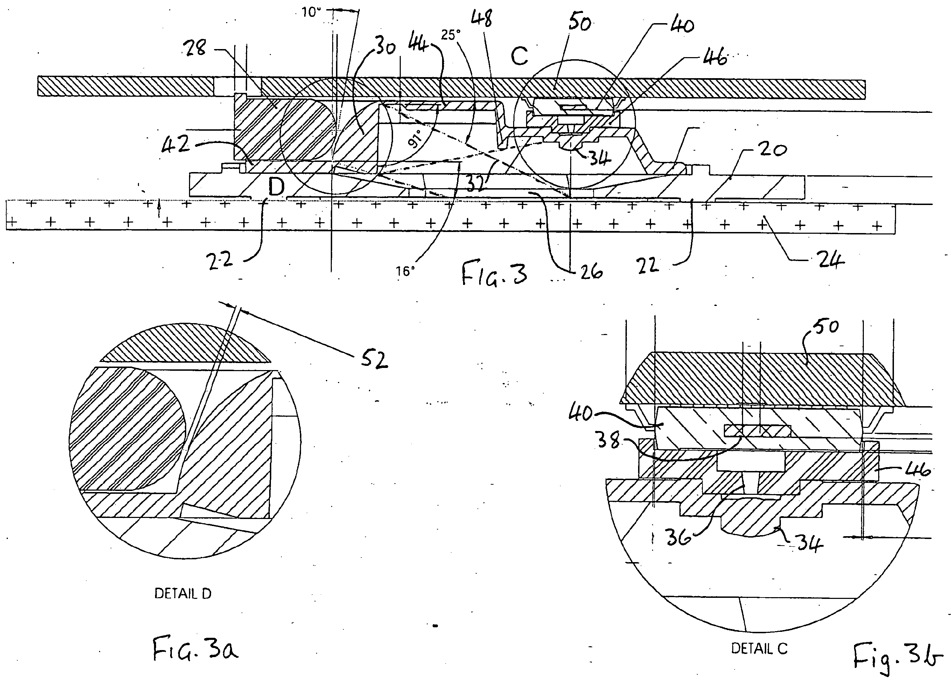

> Fig. 3 is a cross-sectional side view of a computer mouse according to one embodiment of the invention; and
> Figs. 3a and 3b show details of Fig 3 to an enlarged scale.

Referring to Fig. 1, the invention is based on making use of the light-bending properties of prisms to allow the light from a light source such as an LED to be diverted without making use of reflection. In this embodiment, a prism generally designated 10 has an input face 12 and an output face 14. The input face 12 is positively curved, in this example spherical, to provide light-gathering capability.

The rays shown in Fig. 1 represent the output from an LED (not shown in Figs. 1 and 2) arranged at an angle to the input face 12, the LED having a typical conical output with a semi-angle of 13° - 22°.

The output face 14 is arranged at an angle to the input face 12. Thus, light passing through the input face 12 undergoes bending, and passage through the output face 14 provides further bending.

In this example, the LED axis is horizontal. The input face 12 is tilted between 25° and 45°, preferably 32° as shown, and the output face 14 is flat or very slightly curved and is substantially vertical, preferably in the range 0 to -5°.

The preferred forms of the invention rely on the principle of a prism, set where:

$$\frac{dD}{dI} = 0 \qquad (\text{Eq. 1})$$

where D is the deviation angle and I is the angle of incidence of the axial ray. The advantage of this is to have the same overall ray bending even though the light is incident off-axis due to the conical LED output.

The prism 10 is most suitably formed as an integral unit by moulding an optical plastic material.

It will be noted that the prism 10 acts solely to deflect the light beam, without any internal reflection. Thus, the surfaces of the prism 10 other than the input 12 and output 14 surfaces do not need to be of optical quality.

The prism 10 not only provides the desired angle change for the light beam, but also forms the beam into the desired shape, i.e. with a plane or slightly curved wavefront as indicated at 18.

Fig. 2 illustrates an alternative prism which provides the same effects as in Fig. 1 but with a different geometry. In Fig. 2, the input face 12 is vertical (0°) and is positively curved. The output face 14 is flat and is tilted to illuminate at the desired distance: between -20° and -32°, in the example shown -22°. Here again, the light is deviated to the desired location without being subject to reflection.

In general terms, the desired result may be achieved with a prism in which the input face has an angle from -10° to +60°, and the output face has an angle from -60° to +10°, with one of the two being substantially vertical (e.g. within ±5°).

Figs. 1 and 2 show the prism assembly as rotationally symmetrical. However, in practice a non-symmetrical form may be preferred depending on the area to be illuminated.

Turning to Fig. 3, one specific form of optical mouse is illustrated, using a prism assembly as in Fig. 1. The mouse has a base 20 including ribs 22 upon which it can be slid across a surface such as a mouse mat 24. The base 20 defines an aperture 26.

An LED 28 is mounted horizontally, i.e. parallel to the mouse mat 24 to provide light via prism 30 as seen at 32 to impinge on the mouse mat 24 via the aperture 26. A lens 34 focuses an image of the illuminated surface via an optical aperture 36 onto the image surface 38 of an image sensor package 40.

The LED 28 is mounted on an extension 42 of the prism 30. To collect th,e maximum amount of light, the LED 28 is placed close to the prism 30, leaving a gap 52 (Fig. 3a) of 0.1 - 0.4 mm.

In this embodiment, the prism 30 and extension 42 are moulded integrally with the lens 34, and are spaced from the lens 34 by a leg 44 of the moulding, which also includes a downwardly-projecting rib 48 acting as an optical baffle between the prism 30 and the lens 34. The aperture 36 is formed in a member 46 which is suitably also a plastic moulding, and is shaped to cooperate with a formation on the lens moulding such that these two parts fit together.

It will be seen that the optical moulding 30,34,42,44 makes use of a prism 30 of the type shown in Fig. 1. The moulding could equally incorporate a prism of the type shown in Fig. 2. However, the former is preferred as it is simpler and cheaper to mould.

The image sensor package 40, which may be any suitable sensor such as a CMOS single-chip sensor, is mounted on a printed circuit board 50 mounted parallel to the mouse base 20. It will be understood that the PCB 50 mounts other electronic components (not shown), and in particular the PCB 50 may provide a mounting for the mouse buttons (not shown).

Suitable operation of the image sensor package to provide X and Y signals is known in the art and will not be described herein.

Embodiments of the invention provide a number of advantages. The mouse can be made with a low profile, which allows the light source and tracking sensor to be integrated with the button PCB. The efficient collection of light allows the use of a low power and low cost LED. Only two accurate optical surfaces are required, in comparison with three or more in the prior art, further reducing costs. The prism angle may be chosen to allow relaxation of constructional tolerances.

The optical device of the present invention has been illustrated above as being incorporated within an optical mouse. However, the man skilled in the art will realise that the principles of the invention can be incorporated in a number of different optical devices which are suitable for use in a number of different applications, for example: a general motion sensor; detection of motion of an object on skin, for example to enable shaving with a laser; surface shape detection; measuring presence of rain or dust on a surface such as a car windscreen; switches operable by waving of a hand near an appropriate sensor; checking the position of a moving object in an industrial context; a virtual mouse" application, whereby hand movements are detected on a glass surface, or even in three dimensions; detection of atmospheric changes; a proximity sensor for use as an alarm system or for parking safely; detection of wind speeds; or as a general detector to monitor rotational motion.

**Claims**

1. An optical device which in use is positioned on a surface (24) and which illuminates an area of said surface under the device; the device comprising a printed circuit board (50) arranged parallel to said surface (24); a light source (28) and a light guide for projecting light from the light source (28) onto said area; wherein the light guide comprises a body of optically transparent material formed to provide an prism (10;30) having an input face (12) facing the light source (28) and an output face (14) spaced from and at an angle to the input face (12); **characterised in that**:

   the light source is arranged horizontally with respect to said surface;
   with reference to the perpendicular to said surface as 0°, the input face (12) is positively curved and has an angle from -10° to +60°, the output face (14) has an angle from -60° to +10°, and one of said faces has an angle less than :L5', such that in use, light from the light source (28) passing through the input face undergoes bending and passage through the output face provides further bending such that light from the light source is refracted from the horizontal onto said surface by the prism (10;30); and
   said light source (28) and light guide are provided beneath an underside surface of said printed circuit board (50).

2. An optical device according to claim 1, in which the input face is formed as a Fresnel lens.

3. An optical device according to claim 1 or 2, in which the input face (12) has an angle between 25° and 45°, and the output face (14) has an angle between 0° and -5°.

4. An optical device according to claim 3, in which the input face has an angle of about 32°, and the output face (14) has an angle of about 0°.

5. An optical device according to claim 1 or 2, in which the input face (12) has an angle of about 0°, and the output face (14) has an angle between -20° and - 30°.

6. An optical device according to claim 5, in which the output face (14) has an angle of about -22°.

7. An optical device according to any preceding claim, in which said body of optically transparent material is an integral body (30).

8. An optical device according to any preceding claim, in which the prism (10; 30) is formed with an extension (42) adapted to locate the light source (28) in a given relationship to the input face (12).

9. An optical device according to claim 8, in which the extension (42) is adapted to mount a light emitting diode (28) such that the input face (12) is at an angle to the emission axis of the light emitting diode (28).

10. An optical device according to claim 8 or claim 9, in which the prism (30) and the extension (42) are formed as a unit with a lens (34) which is positioned to view said area of the surface (24) on which light is projected by the optical element (30).

11. An optical device according to claim 10, in which the prism (30), the extension (42) and the lens (34) form part of a single moulding of optically transparent material.

12. An optical mouse comprising a base (20) adapted for sliding movement across a surface (24), an aperture (26) in the base (20), an optical device as claimed in claim 1, said optical device arranged in use to deviate light from the light source (28) through the aperture (26) to impinge on said surface (24), a lens (34) mounted in the mouse to view the light projected on said surface (24), and an image sensor (40) positioned to receive an image from the lens (34).

13. An optical mouse according to claim 12, in which the light source is a light emitting diode (28).

14. An optical mouse according to claim 13, in which the light emitting diode (28) is mounted on an extension (42) of the prism (30).

15. An optical mouse according to claim 14, in which the lens (34) is formed as a unit with the prism (30) and extension (42).

16. An optical mouse according to any of claims 12 to 15, further including a lens aperture (36) formed in a member (46) interposed between the lens (34) and the image sensor (40).

17. An optical mouse according to claim 16, in which said member (46) interfits with the lens (34).


**Patentansprüche**

1. Optische Vorrichtung, die im Gebrauch auf einer Oberfläche (24) positioniert ist und die einen Bereich der genannten Oberfläche unter der Vorrichtung illuminiert; wobei die Vorrichtung eine Leiterplatte (50) umfasst, die parallel zur genannten Oberfläche (24) angeordnet ist; eine Lichtquelle (28) und eine Lichtführung zum Projizieren von Licht ab der Lichtquelle (28) auf den genannten Bereich umfasst; wobei die Lichtführung einen Körper aus optisch transparentem Material umfasst, das geformt ist ein Prisma (10;30) bereitzustellen, das eine der Lichtquelle (28) zugewandte Eingangsfläche (12) und eine Ausgangsfläche (14) aufweist, die mit einem Winkel zur Eingangsfläche (12) beabstandet ist;
**dadurch gekennzeichnet, dass**:

Die Lichtquelle in Bezug auf die genannte Oberfläche horizontal angeordnet ist;
mit Bezug auf die Senkrechte zur genannten Oberfläche als 0°, die Eingangsfläche (12) positiv gekrümmt ist und einen Winkel von -10° bis +60° aufweist, die Ausgangsfläche (14) einen Winkel von -60° bis +10° aufweist, und eine der der genannten Flächen einen Winkel von weniger als ±5° aufweist, derart, dass im Gebrauch Licht ab der Lichtquelle (28), das durch die Eingangsfläche hindurch geht, einer Beugung unterzogen wird und Durchgang durch die Ausgangsfläche weitere Beugung derart bereitstellt, dass Licht ab der Lichtquelle vom Prisma (10;30) aus der Horizontalen auf die genannte Oberfläche gebrochen wird; und

die genannte Lichtquelle (28) und die Lichtführung unterhalb einer unterseitigen Oberfläche der genannten Leiterplatte (50) angeordnet sind.

2. Optische Vorrichtung nach Anspruch 1, bei der die Eingangsfläche als eine Fresnel Linse geformt ist.

3. Optische Vorrichtung nach Anspruch 1 oder 2, bei der die Eingangsfläche (12) einen Winkel zwischen 25° und 45° aufweist, und die Ausgangsfläche (14) einen Winkel zwischen 0° und -5° aufweist.

4. Optische Vorrichtung nach Anspruch 3, bei der die Eingangsfläche einen Winkel von ca. 32° aufweist, und die Ausgangsfläche (14) einen Winkel von ca. 0° aufweist.

5. Optische Vorrichtung nach Anspruch 1 oder 2, bei der die Eingangsfläche (12) einen Winkel von ca. 0° aufweist, und die Ausgangsfläche (14) einen Winkel zwischen - 20° und -30° aufweist.

6. Optische Vorrichtung nach Anspruch 5, bei der die Ausgangsfläche (14) einen Winkel von ca. -22° aufweist.

7. Optische Vorrichtung nach irgendeinem vorhergehenden Anspruch, bei welcher der genannte Körper aus optisch transparentem Material ein integraler Körper (30) ist.

8. Optische Vorrichtung nach irgendeinem vorhergehenden Anspruch, bei der das Prisma (10; 30) mit einer Verlängerung (42) geformt ist, die angepasst ist, die Lichtquelle (28) in einer gegebenen Beziehung zur Eingangsfläche (12) zu platzieren.

9. Optische Vorrichtung nach Anspruch 8, bei der die Verlängerung (42) angepasst ist, eine Leuchtdiode (28) derart zu montieren, dass sich die Eingangsfläche (12) in einem Winkel zur Emissionsachse der Leuchtdiode (28) befindet.

10. Optische Vorrichtung nach Anspruch 8 oder Anspruch 9, bei der das Prisma (30) und die Verlängerung (42) als eine Einheit mit einer Linse (34) geformt sind, die positioniert ist, den genannten Bereich der Oberfläche (24) zu betrachten, auf den vom optischen Element (30) Licht projiziert wird.

11. Optische Vorrichtung nach Anspruch 10, bei der das Prisma (30), die Verlängerung (42) und die Linse (34) Teil eines einzigen Formteils aus optisch transparentem Material formen.

12. Optische Maus, die eine Basis (20), welche für gleitende Bewegung über eine Oberfläche (24) angepasst ist, eine Öffnung (26) in der Basis (20), eine optische Vorrichtung wie in Anspruch 1 beansprucht umfasst, wobei die genannte optische Vorrichtung eingerichtet ist, im Gebrauch Licht ab der Lichtquelle (28) durch die Öffnung (26) abzulenken, um auf die genannte Oberfläche (24) zu treffen, eine in der Maus montierte Linse (34) zum Betrachten des auf die genannte Oberfläche (24) projizierten Lichts, und einen Bildsensor (40) umfasst, der positioniert ist, ein Bild von der Linse (34) zu empfangen.

13. Optische Maus nach Anspruch 12, bei der die Lichtquelle eine Leuchtdiode (28) ist.

14. Optische Maus nach Anspruch 13, bei der die Leuchtdiode (28) auf einer Verlängerung (42) des Prismas (30) montiert ist.

15. Optische Maus nach Anspruch 14, bei der die Linse (34) als eine Einheit mit dem Prisma (30) und der Verlängerung (42) geformt ist.

16. Optische Maus nach irgendeinem der Ansprüche 12 bis 15, die ferner eine Linsenöffnung (36) einschließt, die in einem Element (46) geformt ist, das zwischen der Linse (34) und dem Bildsensor (40) zwischengeschaltet ist.

17. Optische Maus nach Anspruch 16, bei der das genannte Element (46) mit der Linse (34) zusammenpasst.

**Revendications**

1. Un dispositif optique positionné, en cours d'usage, sur une surface (24), et éclairant une zone de ladite surface sous le dispositif; le dispositif comprenant une carte de circuit imprimé (50) disposé parallèlement à ladite surface (24) ; une source de lumière (28) et un guide de lumière pour la projection de la lumière de la source de lumière (28) sur ladite zone ; ledit guide de lumière comprenant un corps réalisé avec une matière optiquement transparente, et façonné de façon à présenter un prisme (10, 30) dont une face d'entrée (12) fait face à la source de lumière (28) et une face de sortie (14) espacée de la face d'entrée (12) en formant un certain d'angle d'inclinaison par rapport à cette dernière ;

   **caractérisé en ce que** :

   la source de lumière de lumière est disposée horizontalement relativement à ladite surface ;
   en considérant la direction perpendiculaire à ladite surface comme étant 0º, la face d'entrée (12) présente une courbure positive avec un angle compris entre -10º et +60º, la face de sortie (14) présente un angle compris entre -60º et +10º, et une desdites faces présente un angle inférieur à $\pm$ 5º, de sorte qu'en cours d'usage, la lumière provenant de la source de lumière (28) et traversant la face d'entrée est soumise à une courbure, et le passage à travers la face de sortie accentue la courbure, de sorte que la lumière provenant de la source de lumière soit réfléchie de l'horizontale sur ladite surface par le prisme (10, 30) ; et
   ladite source de lumière (28) et ledit guide de lumière sont placés sous une surface inférieure de ladite carte de circuit imprimé (50).

2. Un dispositif optique selon la revendication 1, dans lequel la face d'entrée a la forme d'une lentille de Fresnel.

3. Un dispositif optique selon la revendication 1 ou 2, dans lequel la face d'entrée (12) présente un angle compris entre 25º et 45º, et la face de sortie (14) un angle compris entre 0º et -5º.

4. Un dispositif optique selon la revendication 3, dans lequel la face d'entrée présente un angle d'environ 32º, et la face de sortie (14) un angle d'environ 0º.

5. Un dispositif optique selon la revendication 1 ou 2, dans lequel la face d'entrée présente un angle d'environ 0º, et la face de sortie (14) un angle compris entre -20º et -30º.

6. Un dispositif optique selon la revendication 3, dans lequel la face de sortie (14) présente un angle d'environ -22º.

7. Un dispositif optique selon une quelconque des revendications précédentes, dans lequel ledit corps réalisée avec une matière optiquement transparente est un corps en une seule pièce (30).

8. Un dispositif optique selon une quelconque des revendications précédentes, dans lequel le prisme (10, 30) est formé avec une extension (42) adaptée pour placer la source de lumière (28) dans une relation donnée avec la face d'entrée (12).

9. Un dispositif optique selon la revendication 8, dans lequel l'extension (42) est adaptée pour recevoir une diode électroluminescente (28), de sorte que la face d'entrée (12) soit inclinée par rapport à l'axe d'émission de la diode électroluminescente (28).

10. Un dispositif optique selon la revendication 8 ou la revendication 9, dans lequel le prisme (30) et l'extension (42) sont formés comme un ensemble avec une lentille (34) positionné de façon à visionner ladite zone de la surface (24) sur laquelle la lumière est projetée par l'élément optique (30).

11. Un dispositif optique selon la revendication 10, dans lequel le prisme (30), l'extension (42), et la lentille (34) font partie d'un moulage unique réalisé avec une matière optiquement transparente.

12. Une souris optique comprenant un base (20) adaptée pour un mouvement coulissant sur une surface (24), une ouverture (26) pratiquée dans la base (20), un dispositif optique selon la revendication 1, ledit dispositif optique étant agencé pour dévier la lumière provenant de la source lumineuse (28) traversant l'ouverture (26) et incidente sur ladite surface (24), une lentille (34) montée dans la souris pour visionner la lumière projetée sur ladite surface (24), et un capteur d'images (40) positionné pour recevoir une image provenant de la lentille (34).

**13.** Une souris optique selon la revendication 12, dans laquelle la source de lumière est une diode électroluminescente (28).

**14.** Une souris optique selon la revendication 13, dans laquelle la diode électroluminescente (28) est montée sur une extension (42) du prisme (30).

**15.** Une souris optique selon la revendication 14, dans laquelle la lentille (34) est réalisée comme un module unique avec le prisme (30) et l'extension (42).

**16.** Une souris optique selon une quelconque des revendications 12 à 15, comprenant en outre une ouverture de lentille (36) réalisée dans un élément (46) intercalé entre la lentille (34) et le capteur d'images (40).

**17.** Une souris optique selon la revendication 16, dans laquelle ledit élément (46) coopère avec la lentille (34).

Fig.1

Fig.2

FIG. 3

DETAIL D

FIG. 3a

DETAIL C

FIG. 3b

EP 1 619 578 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003034959 A
- DE 10220890 A1